# NOUVEAU FASCICULE DE BREVET EUROPEEN

(11) **EP 2 007 682 B2**
(45) Date de publication et mention de la décision concernant l'opposition: **08.06.2022**
(45) Mention de la délivrance du brevet: 04.05.2016
(21) Numéro de dépôt: 07727063.5
(22) Date de dépôt: 19.03.2007
(51) Int. Cl.: B01J 37/03, B01J 37/08, B01J 21/06, B01J 23/10, B01J 23/63, B01J 35/10, B01J 37/00, B01D 53/94, C01G 25/00

(54) **COMPOSITION A BASE D'OXYDE DE ZIRCONIUM ET D'OXYDE DE CERIUM A REDUCTIBILITE ELEVEE ET A SURFACE SPECIFIQUE STABLE, PROCEDE DE PREPARATION ET UTILISATION DANS LE TRAITEMENT DES GAZ D'ECHAPPEMENT**
ZUSAMMENSETZUNG AUF BASIS VON ZIRCONIUMOXID UND CEROXID MIT HOHER REPRODUZIERBARKEIT UND STABILER SPEZIFISCHER OBERFLÄCHE, HERSTELLUNGSVERFAHREN UND VERWENDUNG BEI DER BEHANDLUNG VON ABGASEN
COMPOSITION BASED ON ZIRCONIUM OXIDE AND CERIUM OXIDE, WITH A HIGH REPRODUCIBILITY AND A STABLE SPECIFIC SURFACE AREA, METHOD OF PREPARATION AND USE IN THE TREATMENT OF EXHAUST GASES

(30) Priorité: 21.03.2006 FR 0602450
(43) Date de publication de la demande: 31.12.2008
(73) Titulaire: RHODIA OPERATIONS, 93300 Aubervilliers (FR)
(72) Inventeur: VERDIER, Stephan, F-92500 Rueil-Malmaison (FR); LARCHER, Olivier, F-17180 Perigny (FR); ROHART, Emmanuel, F-17220 Sainte Soulle (FR); PACAUD, Bernard, Nishinomiya, Hyogo T 662-0011 (JP); TAKEMORI, Hirofumi, Anan, Tokushima 774-0009 (JP); SUDA, Eisaku, Toushima-city, Tokushima 770-8025 (JP)
(74) Mandataire: Lederer & Keller Patentanwälte Partnerschaft mbB
(86) Numéro de dépôt international: PCT/EP2007/052586
(87) Numéro de publication internationale: WO 2007/107546

(56) Documents cités:
- EP-A1- 0 955 267
- WO-A-98/45212
- FR-A- 2 852 596
- FR-A1- 2 852 591
- FR-A1- 2 859 470
- US-A1- 2003 224 931

## Description

La présente invention concerne une composition à base d'oxyde de zirconium et d'oxyde de cérium à réductibilité élevée et à surface spécifique stable, son procédé de préparation et son utilisation notamment dans le traitement des gaz d'échappement d'automobiles.

On utilise à l'heure actuelle pour le traitement des gaz d'échappement des moteurs à combustion interne (catalyse postcombustion automobile) des catalyseurs dits multifonctionnels. Par multifonctionnels, on entend les catalyseurs capables d'opérer non seulement l'oxydation en particulier du monoxyde de carbone et des hydrocarbures présents dans les gaz d'échappement mais également la réduction notamment des oxydes d'azote également présents dans ces gaz (catalyseurs "trois voies"). L'oxyde de zirconium et l'oxyde de cérium apparaissent aujourd'hui comme deux constituants particulièrement importants et intéressants de matériaux rentrant dans la composition de ce type de catalyseurs. Pour être efficaces dans une telle utilisation, ces matériaux doivent présenter une surface spécifique qui reste suffisamment importante même à température élevée. L'oxyde de zirconium permet notamment de stabiliser la surface de ce type de produits.

Une autre qualité requise pour ces matériaux est la réductibilité. On entend par réductibilité, ici et pour le reste de la description, le taux de cérium IV dans le matériau susceptible de se transformer en cérium III sous l'effet d'une atmosphère réductrice et à une température donnée. Cette réductibilité peut se mesurer par exemple par une consommation d'hydrogène dans un domaine de températures donné. Elle est due au cérium dans le cas des compositions du type de celles de l'invention, le cérium ayant la propriété de se réduire ou de s'oxyder. Cette réductibilité doit, bien sûr, être la plus élevée possible.

On cherche par ailleurs toujours à augmenter l'efficacité de ces matériaux, notamment lors de leur utilisation comme support de métaux précieux. Dans cette utilisation, ils favorisent la réduction des oxydes d'azote et l'oxydation du monoxyde de carbone et des hydrocarbures. On cherche aussi à développer des systèmes mettant en oeuvre le moins possible de métal précieux. Plus particulièrement, on développe les systèmes à base de palladium, ce métal présentant l'intérêt d'être moins couteux que d'autres métaux précieux comme le platine. A cette date, les systèmes au palladium sont moins efficaces que ceux à base d'autres métaux, notamment pour les compositions à teneur importante en zirconium.

Le document FR 2852591 décrit une composition à base d'oxyde de zirconium et d'oxyde de cérium dans une proportion d'oxyde de zirconium d'au moins 50% en masse, qui présente une surface spécifique d'au moins 40 m²/g après calcination 6 heures à 500°C. Cette composition est obtenue par un procédé dans lequel on fait précipiter avec une base un mélange des composés de zirconium et de cérium.

L'objet de l'invention est la mise au point d'une composition à propriétés améliorées, susceptible de répondre aux caractéristiques mentionnées ci-dessus, notamment d'une composition susceptible d'être utilisée efficacement avec le palladium.

Dans ce but, la composition de l'invention est telle que définie à la revendication 1.

L'invention concerne encore un procédé de préparation d'une telle composition tel que défini à la revendication 7.

D'autres caractéristiques, détails et avantages de l'invention apparaîtront encore plus complètement à la lecture de la description qui va suivre, ainsi que des divers exemples concrets mais non limitatifs destinés à l'illustrer.

Pour la suite de la description, on entend par surface spécifique, la surface spécifique B.E.T. déterminée par adsorption d'azote conformément à la norme ASTM D 3663-78 établie à partir de la méthode BRUNAUER - EMMETT- TELLER décrite dans le périodique "The Journal of the American Chemical Society, 60, 309 (1938)".

Par lanthanides (Ln), on entend les éléments du groupe constitué par l'yttrium et les éléments de la classification périodique de numéro atomique compris inclusivement entre 57 et 71.

On précise pour la suite de la description que, sauf indication contraire, dans les fourchettes de valeurs qui sont données, les valeurs aux bornes sont incluses.

Les teneurs sont données en masse d'oxydes sauf indication contraire, ces oxydes pour l'expression de ces teneurs étant considérés sous la forme de l'oxyde cérique pour le cérium et sous la forme La₂O₃ et Y₂O₃ pour les deux autres lanthanides La et Y..

Les valeurs de surface spécifiques qui sont indiquées pour une température et une durée données correspondent, sauf indication contraire, à des calcinations sous air à un palier de température sur la durée indiquée.

La composition de l'invention est une composition quaternaire du type oxyde mixte, à base d'oxydes de zirconium, de cérium, d'yttrium et de lanthane.

Les teneurs des différents constituants dans la composition de l'invention peuvent varier dans une certaine gamme de proportions.

Pour le cérium, cette teneur est d'au plus 50% en masse, plus particulièrement d'au plus 45% et encore plus particulièrement d'au plus 40%.

L'oxyde de zirconium constitue le reste de la composition. Ainsi la teneur en zirconium peut être d'au moins 50% en masse, plus particulièrement d'au moins 55% et encore plus particulièrement d'au moins 60%. Cette teneur peut aussi être d'au moins 65% et encore plus particulièrement d'au moins 70%. Compte tenu aussi de la présence des éléments La et Y, la teneur en zirconium peut être inférieure à 50%.

Plus précisément, la teneur en l'autre élément éventuel ou en l'ensemble de ces éléments est habituellement d'au plus 35%. Elle peut être plus particulièrement d'au plus 30% et encore plus particulièrement d'au plus 20% ou d'au plus 10%. Par ailleurs elle est de préférence d'au moins 3%, plus particulièrement d'au moins 5%. Cette teneur peut donc être comprise entre 3% et 35% dans le cas le plus général.

La composition de l'invention présente comme caractéristique principale une réductibilité élevée qui est mesurée dans la présente description par un taux de réductibilité.

La réductibilité de la composition est déterminée par la mesure de sa consommation d'hydrogène mesurée entre 30°C et 900°C. Cette mesure est faite par réduction programmée en température en utilisant de l'hydrogène dilué dans l'argon. On détecte un signal avec un détecteur de conductivité thermique. La consommation de l'hydrogène est calculée à partir de la surface manquante du signal d'hydrogène de la ligne de base à 30 °C à la ligne de base à 900°C. Le taux de réductibilité représente le pourcentage de cérium réduit, étant entendu qu'1/2 mole d'H₂ consommée et mesurée par la méthode décrite plus haut correspond à 1 mole de CeIV réduit.

Le taux de réductibilité peut varier en fonction de la température à laquelle la composition a pu être calcinée lors de sa préparation.

Dans la présente description, les taux de réductibilité donnés sont mesurés par la méthode décrite ci-dessus sur une composition ayant subi une calcination sous air d'une durée qui peut varier de 2 à 4 heures à différentes températures. On notera qu'à l'intérieur de cette gamme de temps on n'observe pas de variation significative du taux de réductibilité. Pour cette raison et sauf indication contraire les taux de réductibilité sont donnés pour des produits ayant été calcinés 2 heures.

Ainsi, après calcination 2 heures sous air à 600°C, la composition de l'invention présenteun taux de réductibilité d'au moins 95%. Le taux de réductibilité peut même atteindre 100%.

Dans le cas d'une calcination 2 heures sous air à 700°C, la composition de l'invention présente aussi un taux de réductibilité d'au moins 95%. Le taux de réductibilité peut là aussi atteindre 100%. D'une manière générale, les taux de réductibilité à 700°C de la composition de l'invention sont identiques à ceux à 600°C ou ne présentent pas de variations significatives avec ceux mesurés à 600°C.

Dans le cas d'une calcination 2 heures sous air à 900°C, la composition de l'invention présente par ailleurs un taux de réductibilité d'au moins 85%.

Selon un mode de réalisation particulier, la composition de l'invention peut présenter une proportion en oxyde de cérium d'au plus 25%, une teneur en un autre oxyde de lanthanide d'au plus 15% et un taux de réductibilité d'au moins 80%, plus particulièrement d'au moins 85% après calcination sous air à 1000°C.

La composition de l'invention présente en outre des caractéristiques particulières de surface spécifique.

Elle possède tout d'abord un niveau de surface important à haute température, c'est-à-dire qu'après calcination à 1100°C pendant 4 heures la surface spécifique de la composition est d'au moins 25 m²/g. Les valeurs de surface les plus élevées à 1100°C sont généralement obtenues pour une composition comprenant une teneur importante en zirconium, c'est à dire d'au moins 50%.

On peut noter aussi que la composition de l'invention présente une stabilité de sa surface entre 900°C et 1000°C. Pour la présente description, cette stabilité est mesurée par la variation entre la surface (S₉₀₀) présentée après calcination à 900°C pendant 4 heures et la surface (S₁₀₀₀) présentée après calcination à 1000°C pendant 4 heures, cette variation étant exprimée par le rapport (S₉₀₀ - S₁₀₀₀)/S₉₀₀ exprimé en %. Cette variation entre 900°C et 1000°C peut être d'au plus 25%, plus particulièrement d'au plus 15%.

On peut retrouver aussi une certaine stabilité de surface entre 1000°C et 1100°C. Cette variation, elle aussi exprimée par le rapport (S₁₁₀₀ - S₁₀₀₀)/S₁₀₀₀, peut être d'au plus 30%, plus particulièrement d'au plus 20% après calcination 4 heures aux températures précitées.

Le procédé de préparation de la composition de l'invention va maintenant être décrit.

La première étape du procédé consiste donc à préparer un mélange aqueux comprenant des composés du zirconium, du cérium de l'yttrium et du lanthane.

Les composés sont de préférence des composés solubles. Ce peut être notamment des sels de zirconium, de cérium et des lanthanides La et Y. Ces composés peuvent être choisis parmi les nitrates, les sulfates, les acétates, les chlorures, le nitrate céri-ammoniacal ou encore, pour le zirconium ou le cérium les (oxo)hydroxydes de ces éléments.

A titre d'exemples, on peut ainsi citer le sulfate de zirconyle, le nitrate de zirconyle ou le chlorure de zirconyle. Le nitrate de zirconyle est utilisé le plus généralement. On peut citer aussi notamment les sels de cérium IV tels que nitrates ou nitrate céri-ammoniacal par exemple, qui conviennent ici particulièrement bien. On peut utiliser du nitrate cérique. Il est avantageux d'utiliser des sels de pureté d'au moins 99,5% et plus particulièrement d'au moins 99,9%. Une solution aqueuse de nitrate cérique peut par exemple être obtenue par réaction de l'acide nitrique sur un oxyde cérique hydraté préparé d'une manière classique par réaction d'une solution d'un sel céreux, par exemple le nitrate céreux, et d'une solution d'ammoniaque en présence d'eau oxygénée. On peut également, en particulier, utiliser une solution de nitrate cérique obtenue selon le procédé d'oxydation électrolytique d'une solution de nitrate céreux tel que décrit dans le document FR-A-2 570 087, et qui constitue ici une matière première intéressante.

On notera ici que les solutions aqueuses de sels de cérium et de sels de zirconyle peuvent présenter une certaine acidité libre initiale qui peut être ajustée par l'addition d'une base ou d'un acide. Il est cependant autant possible de mettre en oeuvre une solution initiale de sels de cérium et de zirconium présentant effectivement une certaine acidité libre comme mentionné ci-dessus, que des solutions qui auront été préalablement neutralisées de façon plus ou moins poussée. Cette neutralisation peut se faire par addition d'un composé basique au mélange précité de manière à limiter cette acidité. Ce composé basique peut être par exemple une solution d'ammoniaque ou encore d'hydroxydes d'alcalins (sodium, potassium,...), mais de préférence une solution d'ammoniaque.

On notera enfin que lorsque le mélange de départ contient un composé du cérium dans lequel celui-ci est sous forme de Ce III, il est préférable de faire intervenir dans le cours du procédé un agent oxydant, par exemple de l'eau oxygénée. Cet agent oxydant peut être utilisé en étant ajouté au milieu réactionnel lors de l'étape (a) ou lors de l'étape (b), notamment à la fin de celle-ci.

Il est aussi possible d'utiliser un sol comme composé de départ du zirconium ou du cérium. Par sol on désigne tout système constitué de fines particules solides de dimensions colloïdales, c'est à dire des dimensions comprises entre environ 1 nm et environ 500nm, à base d'un composé de zirconium ou de cérium ce composé étant généralement un oxyde et/ou un oxyde hydraté de zirconium ou de cérium, en suspension dans une phase liquide aqueuse, lesdites particules pouvant en outre, éventuellement, contenir des quantités résiduelles d'ions liés ou adsorbés tels que par exemple des nitrates, des acétates, des chlorures ou des ammoniums. On notera que dans un tel sol, le zirconium ou le cérium peuvent se trouver soit totalement sous la forme de colloïdes, soit simultanément sous la forme d'ions et sous la forme de colloïdes.

Le mélange peut être indifféremment obtenu soit à partir de composés initialement à l'état solide que l'on introduira par la suite dans un pied de cuve d'eau par exemple, soit encore directement à partir de solutions de ces composés puis mélange, dans un ordre quelconque, desdites solutions.

Le mélange initial étant ainsi obtenu, on procède ensuite, conformément à la deuxième étape (b) du procédé selon l'invention, à son chauffage.

La température à laquelle est mené ce traitement thermique est d'au moins 100°C. Elle peut ainsi être comprise entre 100°C et la température critique du milieu réactionnel, en particulier entre 100 et 350°C, de préférence entre 100 et 200°C.

L'opération de chauffage peut être conduite en introduisant le mélange aqueux contenant les composés précités dans une enceinte close (réacteur fermé du type autoclave), la pression nécessaire ne résultant alors que du seul chauffage du milieu réactionnel (pression autogène). Dans les conditions de températures données ci-dessus, et en milieux aqueux, on peut ainsi préciser, à titre illustratif, que la pression dans le réacteur fermé peut varier entre une valeur supérieure à 1 Bar (10⁵ Pa) et 165 Bar (1,65. 10⁷ Pa), de préférence entre 5 Bar (5. 10⁵ Pa) et 165 Bar (1,65. 10⁷ Pa). Il est bien entendu également possible d'exercer une pression extérieure qui s'ajoute alors à celle consécutive au chauffage.

On peut aussi effectuer le chauffage dans un réacteur ouvert pour les températures voisines de 100°C.

Le chauffage peut être conduit soit sous air, soit sous atmosphère de gaz inerte, de préférence l'azote dans ce cas.

La durée du traitement n'est pas critique, et peut ainsi varier dans de larges limites, par exemple entre 1 et 48 heures, de préférence entre 2 et 24 heures. De même, la montée en température s'effectue à une vitesse qui n'est pas critique, et on peut ainsi atteindre la température réactionnelle fixée en chauffant le milieu par exemple entre 30 minutes et 4 heures, ces valeurs étant données à titre tout à fait indicatif.

A l'issue de cette deuxième étape, on obtient un précipité en suspension dans le milieu réactionnel.

La troisième étape (c) du procédé consiste à amener le milieu réactionnel obtenu précédemment à un pH basique. Cette opération est effectuée en ajoutant au milieu une base telle que par exemple une solution d'ammoniaque.

Par pH basique on entend une valeur du pH supérieure à 7 et de préférence supérieure à 8.

Il est aussi possible, à ce stade du procédé d'effectuer un mûrissement. Celui-ci peut être réalisé directement sur le milieu réactionnel obtenu après addition de la base ou sur une suspension obtenue après remise dans l'eau du précipité. Le mûrissement se fait en chauffant le milieu. La température à laquelle est chauffé le milieu est d'au moins 40°C, plus particulièrement d'au moins 60°C et encore plus particulièrement d'au moins 100°C. Le milieu est maintenu ainsi à une température constante pendant une durée qui est habituellement d'au moins 30 minutes et plus particulièrement d'au moins 1 heure. Le mûrissement peut se faire à la pression atmosphérique ou éventuellement à une pression plus élevée. On peut noter qu'il est possible de faire un second mûrissement après séparation du précipité du milieu réactionnel issu du premier mûrissement et remise de celui-ci dans l'eau, ce second mûrissement s'effectuant dans les conditions qui ont été décrites pour le premier.

La suite du procédé peut être mise en oeuvre selon deux variantes, c'est-à-dire selon les étapes (d) ou (d') décrites plus haut.

Selon un premier mode de réalisation correspondant à l'étape (d), on ajoute au milieu réactionnel issu de l'étape précédente un additif qui est choisi parmi les tensioactifs anioniques, les tensioactifs non ioniques, les polyéthylène-glycols, les acides carboxyliques et leurs sels et les tensioactifs du type éthoxylats d'alcools gras carboxyméthylés. En ce qui concerne cet additif on pourra se référer à l'enseignement de la demande WO-98/45212 et utiliser les tensioactifs décrits dans ce document.

On peut mentionner comme tensioactifs du type anionique les éthoxycarboxylates, les acides gras éthoxylés ou propoxylés, notamment ceux de la marque ALKAMULS^{®}, les sarcosinates de formule R-C(O)N(CH₃)CH₂COO-, les bétaïnes de formule RR'NH-CH₂-COO-, R et R' étant des groupes alkyles ou alkylaryles, les esters phosphates, notamment ceux de la marque RHODAFAC^{®}, les sulfates comme les sulfates d'alcool les sulfates d'éther alcool et les éthoxylats d'alcanolamide sulfatés, les sulfonates comme les sulfosuccinates, les alkyl benzène ou alkyl naphtalène sulfonates.

Comme tensioactif non ionique, on peut mentionner les tensioactifs acétyléniques, les alcools gras éthoxylés ou propoxylés, par exemple ceux des marques RHODASURF^{®} ou ANTAROX^{®}, les alcanolamides, les oxydes d'amine, les alcanolamides éthoxylés, les amines éthoxylées ou propoxylées à longues chaînes, par exemple ceux de la marque RHODAMEEN^{®}, les copolymères oxyde d'éthylène/oxide de propylène, les dérivés du sorbitan, l'éthylène glycol, le propylène glycol, le glycérol, les esters polyglycéryle et leurs dérivés éthoxylés, les alkylamines, les alkylimidazolines, les huiles éthoxylées et les alkylphénols éthoxylés ou propoxylés, notamment ceux de la marque IGEPAL^{®}. On peut citer aussi en particulier les produits cités dans WO-98/45212 sous les marques IGEPAL^{®}, DOWANOL^{®}, RHODAMOX^{®} et ALKAMIDE^{®}.

En ce qui concerne les acides carboxyliques, on peut utiliser notamment les acides mono- ou dicarboxyliques aliphatiques et parmi ceux-ci plus particulièrement les acides saturés. On peut utiliser aussi des acides gras et plus particulièrement les acides gras saturés. On peut citer ainsi notamment les acides formique, acétique, proprionique, butyrique, isobutyrique, valérique, caproïque, caprylique, caprique, laurique, myristique, palmitique, stéarique, hydroxystéarique, éthyl-2-hexanoïque et béhénique. Comme acides dicarboxyliques, on peut mentionner les acides oxalique, malonique, succinique, glutarique, adipique, pimélique, subérique, azélaïque et sébacique.

Les sels des acides carboxyliques peuvent aussi être utilisés.

Enfin, il est possible d'utiliser un tensioactif qui est choisi parmi ceux du type éthoxylats d'alcools gras carboxyméthylés.

Par produit du type éthoxylats d'alcool gras carboxyméthylés on entend les produits constitués d'alcools gras éthoxylés ou propoxylés comportant en bout de chaîne un groupement -CH₂-COOH.

Ces produits peuvent répondre à la formule

R₁-O-(CR₂R₃-CR₄R₅-O)ₙ-CH₂-COOH

dans laquelle R₁ désigne une chaîne carbonée, saturée ou insaturée, dont la longueur est généralement d'au plus 22 atomes de carbone, de préférence d'au moins 12 atomes de carbone; R₂, R₃, R₄ et R₅ peuvent être identiques et représenter l'hydrogène ou encore R₂ peut représenter un groupe CH₃ et R₃, R₄ et R₅ représentent l'hydrogène; n est un nombre entier non nul pouvant aller jusqu'à 50 et plus particulièrement compris entre 5 et 15, ces valeurs étant incluses. On notera qu'un tensio-actif peut être constitué d'un mélange de produits de la formule ci-dessus pour lesquels R₁ peut être saturé et insaturé respectivement ou encore des produits comportant à la fois des groupements -CH₂-CH₂-O- et -C(CH₃)₂-CH₂-O-.

On peut bien entendu utiliser un mélange d'additifs du type décrit ci-dessus.

Après l'addition du tensio-actif, on sépare éventuellement le précipité du milieu liquide par tout moyen connu.

Un autre mode de réalisation, qui correspond à la mise en oeuvre de l'étape (d'), consiste à séparer d'abord le précipité du milieu réactionnel issu de l'étape (c), ceci par tout moyen connu, puis à ajouter l'additif tensioactif à ce précipité, par imprégnation du précipité ou par mélange solide/solide en fonction de l'état du tensio-actif utilisé.

D'une manière générale, la quantité d'additif ou tensio-actif utilisée, exprimée en pourcentage en poids d'additif par rapport au poids de la composition calculé en oxyde, est généralement comprise entre 5% et 100% plus particulièrement entre 15% et 60%.

La dernière étape du procédé, étape (e), comporte une double calcination du précipité obtenu précédemment.

La première calcination est conduite sous gaz inerte ou sous vide. Le gaz inerte peut être l'hélium, l'argon ou l'azote. Le vide est généralement un vide primaire avec une pression partielle en oxygène inférieure à 10⁻¹ mbar. La température de calcination est d'au moins 900°C. Une température en deçà de cette valeur risque de ne pas conduire à un produit présentant les caractéristiques données plus haut de réductibilité. L'augmentation de la température de calcination entraîne une augmentation de la réductibilité qui peut atteindre des valeurs de 100% vers les plus hautes températures. La température est en outre fixée à une valeur tenant compte du fait que la surface spécifique du produit est d'autant plus faible que la température de calcination mise en oeuvre est plus élevée. Ainsi, généralement, la température maximale de calcination est d'au plus 1000°C car au-delà la surface spécifique risque d'être insuffisante. La durée de cette première calcination est généralement d'au moins 2 heures de préférence d'au moins 4 heures et notamment d'au moins 6 heures. Une augmentation de cette durée entraîne habituellement une augmentation du taux de réductibilité. Bien entendu, la durée peut être fixée en fonction de la température, une durée de calcination faible nécessitant une température plus élevée.

On effectue ensuite une seconde calcination sous atmosphère oxydante, par exemple sous air. Dans ce cas, la calcination se fait généralement à une température d'au moins 600°C sur une durée qui est généralement d'au moins 30 minutes. Une température inférieure à 600°C peut rendre difficile l'élimination des additifs utilisés lors des étapes (d) ou (d') décrites plus haut. Il est préférable de ne pas dépasser une température de calcination de 900°C.

La composition de l'invention telle que décrite plus haut ou telle qu'obtenue par le procédé mentionné précédemment se présente sous forme de poudre mais elle peut éventuellement être mise en forme pour se présenter sous forme de granulés, billes, cylindres ou nids d'abeille de dimensions variables. Cette composition peut être appliquée sur tout support utilisé habituellement dans le domaine de la catalyse, c'està-dire notamment des supports inertes thermiquement. Ce support peut être choisi parmi l'alumine, l'oxyde de titane, l'oxyde de cérium, l'oxyde de zirconium, la silice, les spinelles, les zéolites, les silicates, les phosphates de silicoaluminium cristallins, les phosphates d'aluminium cristallins.

La composition peut aussi être utilisée dans des systèmes catalytiques. Ces systèmes catalytiques peuvent comprendre un revêtement (wash coat) à propriétés catalytiques et à base de cette composition, sur un substrat du type par exemple monolithe métallique ou en céramique. Le revêtement peut comporter lui aussi un support du type de ceux mentionnés plus haut. Ce revêtement est obtenu par mélange de la composition avec le support de manière à former une suspension qui peut être ensuite déposée sur le substrat.

Ces systèmes catalytiques et plus particulièrement la composition de l'invention peuvent trouver de très nombreuses applications. Ils sont ainsi particulièrement bien adaptés à, et donc utilisables, dans la catalyse de diverses réactions telles que, par exemple, la déshydratation, l'hydrosulfuration, l'hydrodénitrification, la désulfuration, l'hydrodésulfuration, la déshydrohalogénation, le reformage, le reformage à la vapeur, le craquage, l'hydrocraquage, l'hydrogénation, la déshydrogénation, l'isomérisation, la dismutation, l'oxychloration, la déshydrocyclisation d'hydrocarbures ou autres composés organiques, les réactions de réduction et/ou d'oxydation, en particuliers des hydrocarbures aromatiques, linéaires, ramifiés, du méthane, du CO, la réaction de Claus, le traitement des gaz d'échappement des moteurs à combustion interne, la démétallation, la méthanation, la shift conversion, l'oxydation catalytique des suies émises par les moteurs à combustion interne comme les moteurs diesel ou essence fonctionnant en régime pauvre. Les systèmes catalytiques et la composition de l'invention peuvent enfin être utilisés en combinaison avec des pièges à NOx.

Parmi les utilisations citées, le traitement des gaz d'échappement des moteurs à combustion interne (catalyse post combustion automobile) mettant en oeuvre les systèmes catalytiques précités constitue une application particulièrement intéressante.

Dans le cas de ces utilisations en catalyse, la composition de l'invention peut être employée en combinaison avec des métaux précieux. L'invention concerne donc des systèmes catalytiques, du type décrit plus haut, dans lesquels la composition de l'invention est utilisée comme support des métaux précieux. La nature de ces métaux et les techniques d'incorporation de ceux-ci dans cette composition sont bien connues de l'homme du métier. Par exemple, les métaux peuvent être le platine, le rhodium, le palladium ou l'iridium, ils peuvent notamment être incorporés à la composition par imprégnation. Selon un mode de réalisation particulier de l'invention, le système catalytique contient du palladium à titre de métal précieux. La teneur en métal précieux dans de tels systèmes est généralement d'au plus 10%, de préférence d'au plus 5% et encore plus préférentiellement d'au plus 1%, cette quantité étant exprimée en masse de métal par rapport à l'ensemble métal/composition à base d'oxydes de l'invention. Cette teneur peut varier notamment en fonction de l'application recherchée et de la nature de la composition à base d'oxydes.

Il est intéressant de noter que la composition de l'invention peut donner des résultats semblables à celles de l'art antérieur pour une quantité de métal précieux inférieure de 10% au moins.

Des exemples vont maintenant être donnés.

Les tests d'évaluation qui sont mentionnés dans les exemples ont été conduits dans les conditions suivantes.

### Taux de réductibilité

Le taux de réductibilité du cérium est mesuré en effectuant une réduction en température programmée sur un appareil Ohkura Riken TP5000. Cet appareil permet de mesurer la consommation d'hydrogène d'une composition selon l'invention en fonction de la température et d'en déduire le taux de réduction du cérium.

Plus précisément, on utilise l'hydrogène comme gaz réducteur à 10% en volume dans l'argon avec un débit de 30 mL/mn. Le protocole expérimental consiste à peser 200 mg de l'échantillon dans un récipient préalablement taré. L'échantillon est ensuite introduit dans une cellule en quartz contenant dans le fond de la laine de quartz. L'échantillon est enfin recouvert de laine de quartz et positionné dans le four de l'appareil de mesure. Le programme de température est le suivant :
- oxydation : montée en température jusqu'à 500°C avec une rampe de montée à 10°C/mn sous O₂ à 5%vol dans He;
- palier de 30 mn puis descente à 30°C;
- traitement à 30°C sous Ar pendant 20 mn;
- réduction : montée en température jusqu'à 900°C avec une rampe de montée à 20°C/mn sous H₂ à 10 %vol dans Ar;
- calibration;
- descente en température sous Ar de 900°C à 30°C.

Lors de ce programme, la température de l'échantillon est mesurée à l'aide d'un thermocouple placé dans la cellule de quartz au-dessus de l'échantillon. La consommation d'hydrogène lors de la phase de réduction est déduite grâce à la calibration de la variation de la conductivité thermique du flux gazeux mesurée en sortie de la cellule à l'aide d'un détecteur de conductivité thermique (TCD).

Le taux de réduction du cérium est calculé à partir de la consommation d'hydrogène mesurée entre 30°C et 900°C.

### Test catalytique trois voies dynamique

Ce test permet d'évaluer dans des conditions dynamiques (fréquence d'oscillation de 1 Hz) les performances des catalyseurs monométalliques sous forme de poudre vis à vis de l'élimination des polluants CO, NO et hydrocarbures. Les hydrocarbures mis en oeuvre dans le test sont le propane et le propène. Plusieurs mesures sont effectuées en isotherme en faisant varier la richesse du mélange gazeux entre les valeurs 0,980 et 1,015. On donne dans le tableau qui suit la composition de ce mélange gazeux pour ces deux valeurs. La température d'évaluation est de 480°C et la masse de catalyseur de 20 mg en mélange avec 150 mg de SiC utilisé comme diluant inerte. Les performances catalytiques sont données en COP (Cross Over Point) qui est défini comme le point d'intersection des courbes de conversion du CO et du NO en fonction de la richesse du mélange.

Pour ce test, on imprègne une composition selon l'invention avec une solution de nitrate de métal précieux palladium ou rhodium. Dans le cas du palladium, on fixe une teneur massique de 0,5% en élément palladium. Dans le cas du rhodium, on fixe une teneur massique de 0,1% ou 0,07% en élément rhodium. Le produit est ensuite séché et activé sous air à 500°C pendant 4h. Avant d'effectuer le test, on procède à un vieillissement à 950°C pendant 16h ou à 1050°C pendant 48h en alternant un flux oxydant 1,8%vol O₂ / 10%vol H₂O / qsp N₂ d'une durée de 5 mn et un flux réducteur 1,8%vol CO / 10%vol H₂O / qsp N₂ d'une durée de 5 mn.

| Composition | % en Vol. richesse 0,98 | % en Vol. Richesse 1,024 |
|---|---|---|
| CO₂ | 14,00 | 14,00 |
| H₂O | 10,00 | 10,00 |
| CO | 0,40 | 1,40 |
| O₂ | 0,80 | 0,40 |
| C₃H₆ | 0,0375 | 0,0375 |
| C₃H₈ | 0,0125 | 0,0125 |
| NO | 0,095 | 0,095 |
| N₂ | complément | complément |

### Test catalytique trois voies d'amorçage

Ce test d'amorçage (ou de light-off) permet d'évaluer la température à laquelle les catalyseurs trois voies sous forme de poudre atteignent 20% ou 50% de conversion (T20 ou T50) vis à vis des polluants CO, NO et hydrocarbures. Le test d'amorçage riche est effectué avec un mélange gazeux de richesse 1,024. Le test d'amorçage pauvre est effectué avec un mélange gazeux de richesse 0,98. La masse de catalyseur de 20 mg est mélangée avec 150 mg de SiC utilisé comme diluant inerte. La conversion vis-à-vis des polluants cités plus haut est alors mesurée en fonction de la température qui varie entre 200 et 500°C avec une rampe de 25°C/min. Les performances d'amorçage pour chaque polluant sont exprimées en T20, température à laquelle on atteint 20% de conversion.

Pour ce test, on imprègne une composition selon l'invention avec une solution de nitrate de métal précieux tel que le palladium ou le rhodium. Le produit est ensuite séché et activé sous air à 500°C pendant 4h. Avant d'effectuer le test, on procède à un vieillissement à 950°C pendant 16h ou à 1050°C pendant 48h en alternant un flux oxydant 1,8%vol O₂ / 10%vol H₂O / qsp N₂ d'une durée de 5 mn et un flux réducteur 1,8%vol CO / 10%vol H₂O / qsp N₂ d'une durée de 5 mn.

### EXEMPLE 1 (ne fait pas partie de l'invention)

Cet exemple concerne la préparation d'une composition à base d'oxydes de cérium, de zirconium et de lanthane dans les proportions respectives en masse d'oxyde de 47%, 47% et 6%.

Dans les proportions stoechiométriques requises pour l'obtention de la composition ci-dessus, on mélange une solution de nitrate cérique, une solution de nitrate de lanthane et une solution de nitrate de zirconyle.

La concentration de ce mélange (exprimée en oxyde des différents éléments) est ajustée à 80 g/l. Ce mélange est ensuite porté à 150°C pendant 4 heures.

Une solution d'ammoniaque est ensuite ajoutée au milieu réactionnel de telle sorte que le pH soit supérieur à 8,5. Le milieu réactionnel ainsi obtenu est porté à ébullition pendant 2 heures. Après décantation puis soutirage, on remet en suspension le produit solide et le milieu ainsi obtenu est traité pendant 1 heure à 100°C.

La suspension ainsi obtenue est alors filtrée sur Büchner. On récupère un précipité contenant 35% en masse d'oxyde.

On prélève 100 g de ce précipité.

Parallèlement, on a préparé un gel de laurate d'ammonium dans les conditions suivantes: on introduit 250 g d'acide laurique dans 135 ml d'ammoniaque (12 mol/l) et 500 ml d'eau distillée, puis on homogénéise à l'aide d'une spatule.

28 g de ce gel sont ajoutés à 100 g du précipité puis l'ensemble est malaxé jusqu'à obtention d'une pâte homogène.

La première calcination a lieu sous azote avec un débit de 300 cm³/mn à une température de 1000°C pendant 4h en palier. Le produit est ensuite ramené à température ambiante. La deuxième calcination est faite sous air avec un débit de 300 cm³/mn à une température de 600°C pendant 2h en palier.

Le produit ainsi obtenu présente une surface de 27 m²/g.

On indique ci-dessous les surfaces obtenues après calcinations ultérieures à différentes températures.

| | |
|---|---|
| 4h 1000°C | = 26 m²/g |
| 4h 1100°C | = 23 m²/g |

La variation de surface pour des températures de calcination comprises entre 1000 °C et 1100 °C est de 12%.

On donne par ailleurs ci-dessous les taux de réductibilité et une température de réductibilité maximale après calcination sous air à différentes températures. Pour la valeur à 600°C il s'agit du produit tel qu'obtenu à l'issue du mode opératoire qui a été décrit plus haut dans cet exemple. Pour l'autre valeur de température, il s'agit du même produit qui a ensuite subi une calcination supplémentaire sur la durée et à la température indiquées.

| | | |
|---|---|---|
| 2h 600°C | taux de réductibilité = 100% | Tmax = 580 °C |
| 2h 900°C | taux de réductibilité = 88% | |

### EXEMPLE 2

Cet exemple concerne la préparation d'une composition selon l'invention à base d'oxydes de cérium, de zirconium, de lanthane et d'yttrium dans les proportions respectives en masse d'oxyde de 40%, 50%, 5% et 5%.

Dans les proportions stoechiométriques requises pour l'obtention de la composition ci-dessus, on suit un mode opératoire identique à celui de l'exemple 1. Le précurseur utilisé pour l'yttrium est une solution de nitrate d'yttrium. Le précipité présente une teneur en oxyde de 35%. On utilise 41,4 g de laurate d'ammonium pour 100 g de précipité.

Le produit ainsi obtenu présente une surface de 36 m²/g.

On indique ci-dessous les surfaces obtenues après calcinations ultérieures à différentes températures.

| | |
|---|---|
| 4h 1000°C | = 34 m²/g |
| 4h 1100 °C | = 27 m²/g |

La variation de surface pour des températures de calcination comprises entre 1000 °C et 1100 °C est de 21 %.

On donne par ailleurs ci-dessous les taux de réductibilité et une température de réductibilité maximale après calcination sous air à différentes températures. Pour la valeur à 600°C il s'agit du produit tel qu'obtenu à l'issue du mode opératoire qui a été décrit plus haut dans cet exemple. Pour l'autre valeur de température, il s'agit du même produit qui a ensuite subi une calcination supplémentaire sur la durée et à la température indiquées.

| | | |
|---|---|---|
| 2h 600°C | taux de réductibilité | = 96% Tmax = 560°C |
| 2h 900°C | taux de réductibilité | = 88% |

On donne par ailleurs ci-dessous les résultats des tests de vieillissement tels que décrits précédemment et obtenus sur le produit issu du procédé de préparation décrit plus haut, c'est-à-dire notamment après une première calcination de 1000°C 4h et une seconde calcination de 600°C 2h.

Après vieillissement redox 950°C de 16h, le test catalytique trois voies d'amorçage en milieu riche indique que ce produit imprégné à 0,1% en masse de rhodium atteint 20% de conversion du NO à 350°C et 20% de conversion du propène à 360°C.

Après vieillissement redox 1050°C/48h, le test catalytique trois voies d'amorçage en milieu riche indique que ce produit imprégné à 0,1% en masse de rhodium atteint 50% de conversion du NO à 405°C, 50% de conversion du propène à 408 °C et 20% de conversion du CO à 345°C.

De même après vieillissement redox 1050°C/48h, le test catalytique trois voies d'amorçage en milieu pauvre indique que ce produit imprégné à 0,1% en masse de rhodium atteint 50% de conversion du CO à 360°C et 50% de conversion du propène à 390°C.

Après vieillissement redox 1050°C/48h, le test catalytique trois voies dynamique indique une conversion de 95% au COP pour un produit imprégné à 0,1% en masse de rhodium. On obtient une conversion de 92,5% au COP pour un produit imprégné avec 0,07% en masse de rhodium. La diminution de 30% de la teneur massique en rhodium entraîne une diminution du COP de 2,5%.

### EXEMPLE 3 (ne fait pas partie de l'invention)

Cet exemple concerne la préparation d'une composition à base d'oxydes de cérium, de zirconium, de lanthane et de néodyme dans les proportions respectives en masse d'oxyde de 21 %, 72%, 2% et 5%.

Dans les proportions stoechiométriques requises pour l'obtention de la composition ci-dessus, on suit un mode opératoire identique à celui de l'exemple 1. Le précurseur utilisé pour le néodyme est une solution de nitrate de néodyme. Le précipité présente une teneur en oxyde de 30%. On utilise 35,5 g de laurate d'ammonium pour 100 g de précipité.

Le produit ainsi obtenu présente une surface de 40 m²/g.

On indique ci-dessous les surfaces obtenues après calcinations ultérieures à différentes températures.

| | |
|---|---|
| 4h 1000°C | = 38 m²/g |
| 4h 1100°C | = 27 m²/g |

La variation de surface pour des températures de calcination comprises entre 1000 °C et 1100 °C est de 29%.

On donne par ailleurs ci-dessous les taux de réductibilité et une température de réductibilité maximale après calcination sous air à différentes températures. Pour la valeur à 600°C il s'agit du produit tel qu'obtenu à l'issue du mode opératoire qui a été décrit plus haut dans cet exemple. Pour l'autre valeur de température, il s'agit du même produit qui a ensuite subi une calcination supplémentaire sur la durée et à la température indiquées.

| | | |
|---|---|---|
| 2h 600 °C | taux de réductibilité = 100% | Tmax = 540 °C |
| 2h 900°C | taux de réductibilité = 90% | |
| 2h 1000°C | taux de réductibilité = 87% | |

On donne par ailleurs ci-dessous les résultats obtenus sur le produit issu du procédé de préparation décrit plus haut, c'est-à-dire notamment après une première calcination de 1000°C 4h et une seconde calcination de 600°C 2h après les tests catalytique trois voies décrits précédemment.

Le test catalytique trois voies dynamique indique une conversion de 94% au COP pour un produit imprégné à 0,5% en masse de palladium. Pour une richesse de 1,005, le taux de conversion des NOx mesuré dans ce test est de 99%.

Dans le test catalytique trois voies d'amorçage en milieu riche, ce produit imprégné à 0,5% en masse de palladium atteint 20% de conversion du NO à une température de 400°C.

### EXEMPLE 4 (ne fait pas partie de l'invention)

Cet exemple concerne la préparation d'une composition à base d'oxydes de cérium, de zirconium et de lanthane dans les proportions respectives en masse d'oxyde de 30%, 42% et 28%.

Dans les proportions stoechiométriques requises pour l'obtention de la composition ci-dessus, on suit un mode opératoire identique à celui de l'exemple 1. Le précipité présente une teneur en oxyde de 34%. On utilise 40 g de laurate d'ammonium pour 100 g de précipité.

Le produit ainsi obtenu présente une surface de 23 m²/g et un taux de réductibilité de 98 % mesuré à 600°C, la température maximale de réductibilité est de 625°C.

On indique ci-dessous les surfaces obtenues après calcinations ultérieures à différentes températures.

| | |
|---|---|
| 4h 1000°C | = 21 m²/g |
| 4h 1100°C | = 17 m²/g |

La variation de surface pour des températures de calcination comprises entre 1000 °C et 1100°C est de 19%.

### EXEMPLE 5 COMPARATIF

Cet exemple concerne la préparation d'une composition semblable à celle de l'exemple 3, c'est-à-dire à base d'oxydes de cérium, de zirconium, de lanthane et de néodyme dans les proportions respectives en masse d'oxyde de 21%, 72%, 2% et 5%.

Dans un bécher agité, on introduit 900 ml de nitrate de zirconyle (80g/l), 42,3 ml de nitrate de cérium à l'état d'oxydation III (496 g/l), 4,4 ml de nitrate de lanthane (454 g/l) et 9,5 ml de nitrate de néodyme (524 g/l). On complète ensuite avec de l'eau distillée de façon à obtenir 1 litre d'une solution de ces nitrates.

Dans un réacteur agité, on introduit 250 ml d'une solution d'ammoniaque (12 mol/l), 74 ml d'eau oxygénée (110 volumes) et on complète ensuite avec de l'eau distillée de façon à obtenir un volume total de 1 litre.

La solution de nitrates est introduite en une heure dans le réacteur sous agitation constante de manière à obtenir une suspension.

La suspension obtenue est placée dans un autoclave en acier inoxydable équipé d'un mobile d'agitation. La température du milieu est portée à 150°C pendant 2 heures sous agitation.

La suspension ainsi obtenue est alors filtrée sur Büchner. On récupère un précipité de couleur jaune pâle contenant 23 % en masse d'oxyde. On prélève 76 g de ce précipité.

Parallèlement, on a préparé un gel de laurate d'ammonium dans les conditions suivantes : on introduit 250 g d'acide laurique dans 135 ml d'ammoniaque (12 mol/l) et 500 ml d'eau distillée, puis on homogénéise à l'aide d'une spatule.

21 g·de ce gel sont ajoutés au 76 g du précipité dans un broyeur à bille puis l'ensemble est broyé jusqu'à obtention d'une pâte homogène.

Le produit est ensuite calciné sous air à 700°C pendant 4 heures en palier.

Le produit ainsi obtenu présente une surface de 80 m²/g.

On indique ci-dessous les surfaces obtenues après calcinations ultérieures à différentes températures.

| | |
|---|---|
| 4h 900 °C | = 55 m²/g |
| 4h 1000 °C | = 43 m²/g |
| 4h 1100 °C | = 22 m²/g |

La variation de surface pour des températures de calcination comprises entre 1000 °C et 1100°C est de 49%.

La variation de surface pour des températures de calcination comprises entre 900 °C et 1000 °C est de 22%.

On indique ci-dessous les valeurs de réductibilité après calcination à différentes températures. Pour la valeur à 700°C il s'agit du produit tel qu'obtenu à l'issue du mode opératoire qui a été décrit plus haut dans cet exemple. Pour les autres valeurs de température, il s'agit du même produit qui a ensuite subi une calcination supplémentaire sur la durée et à la température indiquées.

| | |
|---|---|
| 4h 700 °C | taux de réductibilité = 85% |
| 2h 900 °C | taux de réductibilité = 80% |
| 2h 1000°C | taux de réductibilité = 78% |

Le test catalytique trois voies indique une conversion de 86% au COP pour un produit imprégné à 0,5% en masse de palladium. Pour une richesse de 1,005, le taux de conversion des NOx mesuré dans ce test est de 89%.

Dans le test catalytique trois voies d'amorçage en milieu riche, ce produit imprégné à 0,5% en masse de palladium atteint 20% de conversion du NO à une température de 415°C.

### EXEMPLE 6 COMPARATIF

Cet exemple concerne la préparation d'une composition semblable à celle de l'exemple 2, c'est-à-dire à base d'oxydes de cérium, de zirconium, de lanthane et d'yttrium dans les proportions respectives en masse d'oxyde de 40%, 50%, 5% et 5%.

Dans les proportions stoechiométriques requises pour l'obtention de la composition ci-dessus, on suit un mode opératoire identique à celui de l'exemple 5. Le précurseur utilisé pour l'yttrium est une solution de nitrate d'yttrium. Le précipité présente une teneur en oxyde de 25%. On utilise 29 g de laurate d'ammonium pour 100 g de précipité.

Le produit ainsi obtenu présente une surface de 73 m²/g.

On indique ci-dessous les surfaces obtenues après calcinations ultérieures à différentes températures.

| | |
|---|---|
| 4h 900 °C = | 54 m²/g |
| 4h 1000°C = | 43 m²/g |
| 4h 1100°C = | 20 m²/g |

La variation de surface pour des températures de calcination comprises entre 1000°C et 1100°C est supérieure à 53%.

La variation de surface pour des températures de calcination comprises entre 900 °C et 1000°C est de 26%.

On indique ci-dessous les valeurs de réductibilité après calcination à différentes températures. Pour la valeur à 700°C il s'agit du produit tel qu'obtenu à l'issue du mode opératoire qui a été mentionné plus haut dans cet exemple. Pour l'autre valeur de température, il s'agit du même produit qui a ensuite subi une calcination supplémentaire sur la durée et à la température indiquées.

| | |
|---|---|
| 2h 700°C | taux de réductibilité = 68% |
| 2h 900°C | taux de réductibilité = 63% |

On donne par ailleurs ci-dessous les résultats des tests de vieillissement tels que décrits précédemment et obtenus sur le produit issu du procédé de préparation décrit plus haut pour l'exemple 5, c'est-à-dire après une calcination à 700°C 4h.

Après un vieillissement redox 950°C/16h, le test catalytique trois voies d'amorçage en milieu riche indique que ce produit imprégné à 0,1% en masse de rhodium atteint 20% de conversion du NO à 390°C et 20% de conversion du propène à 395 °C.

Après vieillissement redox 1050°C/48h, le test catalytique trois voies d'amorçage en milieu riche indique que ce produit imprégné à 0,1% en masse de rhodium atteint 50% de conversion du NO à 430°C, 50% de conversion du propène à 426°C et 20% de conversion du CO à 365°C.

Après vieillissement redox 1050°C/48h, le test catalytique trois voies d'amorçage en milieu pauvre indique que ce produit imprégné à 0,1% en masse de rhodium atteint 50% de conversion du CO à 390°C et 50% de conversion du propène à 450°C.

Après vieillissement redox 1050°C/48h, le test catalytique trois voies dynamique indique une conversion de 91 % COP pour un produit imprégné à 0,1% en masse de rhodium. On obtient une conversion de 84% de COP pour un produit imprégné avec 0,07% en masse de rhodium. La diminution de 30% de la teneur massique en rhodium entraîne une diminution du COP de 6%.

On a récapitulé dans le tableau 1 ci-dessous les résultats au COP du test catalytique trois voies dynamique après vieillissement redox 1050°C/48h pour les compositions des exemples 2 et 6 qui présentent les mêmes teneurs en oxydes.

**Tableau 1**

| | | Taux de conversion au COP | |
|---|---|---|---|
| | | Exemple 2 | Exemple 6 comparatif |
| Taux de rhodium | | | |
| (1) | 0,1% | 95% | 91% |
| (2) | 0,07% | 92,5% | 84% |
| Variation du taux de conversion entre (1) et (2) en % | | 2,5 | 6 |

Il apparaît que la composition de l'invention présente une variation de ses propriétés catalytiques nettement moins importante que celle de la composition comparative lorsque la teneur en rhodium diminue de 30% mais aussi que ses propriétés pour la teneur la plus faible en rhodium restent supérieures à celles de la composition comparative pour la teneur la plus haute.

On a récapitulé dans le tableau 2 ci-dessous les résultats au COP des tests catalytiques trois voies dynamique et d'amorcage pour les compositions des exemples 3 et 5, qui présentent les mêmes teneurs en oxydes, et imprégnées à 0,5% en masse de palladium.

**Tableau 2**

| | Exemple 3 | Exemple 5 comparatif |
|---|---|---|
| Test 3 voies dynamique : | | |
| % au COP | 94% | 86% |
| Taux de conversion des NOx (richesse 1,005) | 99% | 89% |
| Test 3 voies d'amorçage milieu riche : | | |
| Température pour 20% de conversion du NO | 400 °C | 415°C |

On voit que la composition de l'invention présente avec le palladium une efficacité importante et supérieure à celle de l'exemple comparatif.

## Revendications

1. Composition quaternaire de type oxyde mixte à base d'oxydes de zirconium, de cérium, d'yttrium et de lanthane ;
**caractérisée en ce qu'**elle présente une proportion en oxyde de cérium d'au plus 50% en masse, une surface spécifique après calcination 4 heures à 1100°C d'au moins 25 m²/g et un taux de réductibilité :
- d'au moins 95% après calcination 2 heures sous air à 600°C; ou
- d'au moins 95% après calcination 2 heures sous air à 700°C; ou
- d'au moins 85% après calcination 2 heures sous air à 900°C ;
la réductibilité de la composition étant déterminée par la mesure de sa consommation d'hydrogène mesurée entre 30°C et 900°C et le taux de réductibilité étant calculé à partir d'une consommation d'hydrogène mesurée entre 30°C et 900°C,
la mesure étant faite par réduction programmée en température en utilisant de l'hydrogène dilué dans l'argon et un signal étant détecté avec un détecteur de conductivité thermique, la consommation de l'hydrogène étant calculée à partir de la surface manquante du signal d'hydrogène de la ligne de base à 30°C à la ligne de base à 900°C,
le taux de réductibilité représentant le pourcentage de cérium réduit, étant entendu qu'1/2 mole d'H₂ consommée correspond à 1 mole de Ce^{IV} réduit.

2. Composition selon la revendication 1, **caractérisée en ce qu'**elle présente une proportion en oxyde de cérium d'au plus 45%.

3. Composition selon l'une des revendications 1 ou 2, **caractérisée en ce qu'**elle présente une proportion en oxyde de cérium d'au plus 40%.

4. Composition selon l'une des revendications 1 ou 2, **caractérisée en ce qu'**elle présente une proportion en oxyde de cérium d'au plus 25%, une teneur en un autre oxyde de lanthanide d'au plus 15% et un taux de réductibilité d'au moins 80%, plus particulièrement d'au moins 85%, après calcination sous air à 1000°C.

5. Composition selon l'une des revendications 1 à 4, **caractérisée en ce qu'**elle présente une teneur en lanthanide comprise entre 3% et 35%.

6. Composition selon l'une des revendications précédentes, **caractérisée en ce qu'**elle présente une variation de surface spécifique d'au plus 30%, plus particulièrement d'au plus 20%, après calcination 4 heures à 1000°C puis 4 heures à 1100°C.

7. Procédé de préparation d'une composition selon l'une des revendications précédentes, **caractérisé en ce qu'**il comprend les étapes suivantes :
- (a) on forme un mélange aqueux comprenant des composés du zirconium, du cérium et d'un élément précité;
- (b) on chauffe le mélange ainsi formé à une température d'au moins 100°C ce par quoi on obtient un précipité en suspension dans le milieu réactionnel;
- c) on amène le milieu réactionnel obtenu à l'issue du chauffage à un pH basique;
- (d) soit on ajoute d'abord un additif, choisi parmi les tensioactifs anioniques, les tensioactifs non ioniques, les polyéthylène-glycols, les acides carboxyliques et leurs sels et les tensioactifs du type éthoxylats d'alcools gras carboxyméthylés au milieu issu de l'étape précédente et on sépare ensuite ledit précipité;
- (d') soit on sépare d'abord le précipité du milieu issu de l'étape (c) et on ajoute ensuite ledit additif au précipité;
- (e) on effectue une première calcination du précipité ainsi obtenu sous gaz inerte ou sous vide à une température d'au moins 900°C puis une seconde calcination sous atmosphère oxydante à une température d'au moins 600°C.

8. Procédé selon la revendication 7, **caractérisé en ce qu'**à l'issue de l'étape c) on effectue un mûrissement du milieu réactionnel en chauffant le milieu à une température d'au moins 40°C.

9. Procédé selon la revendication 7 ou 8, **caractérisé en ce qu'**on utilise comme composés du zirconium, du cérium et de l'élément précité un composé choisi parmi les nitrates, les sulfates, les acétates, les chlorures, le nitrate céri-ammoniacal.

10. Procédé selon l'une des revendications 7 à 9, **caractérisé en ce que** la seconde calcination est faite sous air.

11. Système catalytique, **caractérisé en ce qu'**il comprend, à titre de support, une composition selon l'une des revendications 1 à 6 ou obtenue par le procédé selon l'une des revendications 7 à 10 et du palladium supporté par ladite composition.

12. Procédé de traitement des gaz d'échappement des moteurs à combustion interne, **caractérisé en ce qu'**on utilise à titre de catalyseur un système catalytique selon la revendication 11.

## Patentansprüche

1. Quartäre Zusammensetzung auf Basis von Zirkoniumoxid, Ceroxid, Yttriumoxid und Lanthanoxid, **dadurch gekennzeichnet, dass** sie einen Anteil an Ceroxid aufweist, der höchstens 50 Massen-% beträgt, eine spezifische Oberfläche nach 4-stündigem Brennen bei 1100 °C, die mindestens 25 m²/g beträgt und eine anteilige Reduktionsfähigkeit aufweist:
- mindestens 95 % nach 2-stündigem Brennen unter Luftzufuhr bei 600 °C; oder
- mindestens 95 % nach 2-stündigem Brennen unter Luftzufuhr bei 700 °C; oder
- mindestens 85 % nach 2-stündigem Brennen unter Luftzufuhr bei 900 °C;
wobei die Reduktionsfähigkeit der Zusammensetzung durch Messen ihres Wasserstoffverbrauchs berechnet wird, der zwischen 30 °C und 900 °C gemessen wird und die anteilige Reduktionsfähigkeit ausgehend von einem Wasserstoffverbrauch berechnet wird, der zwischen 30 °C und 900 °C gemessen wird.
wobei die Messung durch hinsichtlich der Temperatur programmierte Reduktion unter Einsatz von in Argon verdünntem Wasserstoff erfolgt und ein Signal mit einem Wärmeleitfähigkeitsdetektor nachgewiesen wird, der Verbrauch des Wasserstoffs wird ausgehend von der von dem Wasserstoffsignal der Grundlinie bei 30 °C gegenüber der Grundlinie bei 900 °C fehlenden Oberfläche berechnet,
wobei diese anteilige Reduktionsfähigkeit den Prozentsatz von reduziertem Cer repräsentiert, wobei sich versteht, dass ½ Mol H₂, das verbraucht wird, 1 Mol von reduziertem Ce^{IV} entspricht.

2. Zusammensetzung nach einem der vorhergehenden Ansprüche, **dadurch gekennzeichnet, dass** sie einen Anteil an Ceroxid von höchstens 45 % aufweist.

3. Zusammensetzung nach einem der Ansprüche 1 bis 2, **dadurch gekennzeichnet, dass** sie einen Anteil an Ceroxid von höchstens 40 % aufweist.

4. Zusammensetzung nach einem der Ansprüche 1 bis 2, **dadurch gekennzeichnet, dass** sie einen Anteil an Ceroxid von höchstens 25 % aufweist, einen Gehalt an einem weiteren Lanthanoxid von höchstens 15 % und eine anteilige Reduktionsfähigkeit von mindestens 80 % insbesondere von mindestens 85 %, nach Brennen unter Luftzufuhr bei 1.000 °C.

5. Zusammensetzung nach einem der Ansprüche 1 bis 4, **dadurch gekennzeichnet, dass** sie einen Gehalt an Lanthanid aufweist, der im Bereich von 3 % bis 35 % liegt.

6. Zusammensetzung nach einem der vorhergehenden Ansprüche, **dadurch gekennzeichnet, dass** sie, nach 4 Stunden bei 1.000 °C und dann 4 Stunden bei 1.100 °C gebrannt wurde, eine Veränderung der spezifischen Oberfläche erfährt, die höchstens 30 %, insbesondere höchstens 20 % beträgt.

7. Verfahren zur Herstellung einer Zusammensetzung nach einem der vorhergehenden Ansprüche, **dadurch gekennzeichnet, dass** es die folgenden Schritte umfasst:
(a) Bilden eine wässrigen Mischung, die Verbindungen des Zirkoniums, des Cers und eines der vorstehend gebrannten Elemente umfasst,
(b) Erhitzen der auf diese Weise gebildeten Mischung auf eine Temperatur von mindestens 100 °C, wodurch ein Niederschlag erhalten wird, der sich in dem Reaktionsmilieu in Suspension befindet;
(c) Einstellen des Reaktionsmilieus, welche nach dem Erhitzen erhalten wurde, auf einen basischen pH-Wert;
(d) entweder vorgeschaltetes Hinzufügen eines Zusatzstoffes, der aus den anionischen Tensiden, den nichtionischen Tensiden, den Polyethylenglykolen, den Carbonsäuren und deren Salzen sowie den Tensiden vom Typ carboxymethylierte Fettalkoholethoxylate ausgewählt ist, zum Milieu, welches nach dem vorhergehenden Schritt erhalten wurde, woraufhin der Niederschlag abgetrennt wird;
(d') oder vorgeschaltetes Abtrennen des Niederschlags von dem Milieu, welches nach Schritt (c) erhalten wurde, woraufhin der Zusatzstoff zum Niederschlag hinzugefügt wird;
(e) Durchführen eines ersten Brennvorgangs des auf diese Weise erhaltenen Niederschlags unter Inertgas oder unter Vakuum bei einer Temperatur von mindestens 900 °C und anschließend eines zweiten Brennvorgangs unter oxidierender Atmosphäre bei einer Temperatur von mindestens 600°C.

8. Verfahren nach Anspruch 7, **dadurch gekennzeichnet, dass** nach dem Schritt c) eine Reifung des Reaktionsmilieus erfolgt, indem das Milieu auf eine Temperatur von mindestens 40 °C erwärmt wird.

9. Verfahren nach Anspruch 7 oder 8, **dadurch gekennzeichnet, dass** als Verbindungen des Zirkoniums, des Cers und des vorstehend genannten Elements eine Verbindung verwendet wird, die aus den Nitraten, den Sulfaten, den Acetaten, den Chloriden und Cer(IV)-Ammoniumnitrat ausgewählt ist.

10. Verfahren nach einem der Ansprüche 7 bis 9, **dadurch gekennzeichnet, dass** der zweite Brennvorgang unter Luftzufuhr erfolgt.

11. Katalytisches Systems, **dadurch gekennzeichnet, dass** es als Träger eine Zusammensetzung umfasst, die einem der Ansprüche 1 bis 6 entspricht oder durch das Verfahren nach einem der Ansprüche 7 bis 10 erhalten wurde, sowie Palladium, welchem die Zusammensetzung als Träger dient.

12. Verfahren zur Behandlung der Abgase von Verbrennungsmotoren, **dadurch gekennzeichnet, dass** als Katalysator ein katalytisches System nach Anspruch 11 verwendet wird.

## Claims

1. Quaternary composition of the mixed oxide type based on oxides of zirconium , cerium, yttrium and lanthanum **characterized in that** it has a proportion of cerium oxide of not more than 50% by mass, a specific surface area after calcination for 4 hours at 1100°C of at least 25 m²/g and a degree of reducibility
- of at least 95% after calcination in air at 600°C; or
- of at least 95% after calcination in air at 700°C; or
- of at least 85% after calcination in air at 900°C;
the reducibility of the composition being determined by measurement of its hydrogen consumption measured between 30°C and 900°C and the degree of reducibility being calculated from a hydrogen consumption measured between 30°C and 900°C,
the measurement being taken by temperature programmed reduction using hydrogen diluted in argon and a signal is detected with a heat conductivity detector, the consumption of hydrogen being calculated from the area missing from the hydrogen signal of the baseline at 30° C. to the baseline at 900° C,
the degree of reducibility representing the percentage of reduced cerium, it being understood that ½ mol of H₂ consumed and measured by the method described above corresponds to 1 mol of reduced Ce^{IV}.

2. Composition according to claim 1, **characterized in that** it has a proportion of cerium oxide of not more than 45%.

3. Composition according to one of Claims 1 or 2, **characterized in that** it has a proportion of cerium oxide of not more than 40%.

4. Composition according to one of Claims 1 tor 2, **characterized in that** it has a proportion of cerium oxide of not more than 25%, a content of another lanthanide oxide of not more than 15% and a degree of reducibility of at least 80% and more particularly of at least 85%, after calcination in air at 1000°C.

5. Composition according to one of Claims 1 to 4, **characterized in that** it has a lanthanide content of between 3% and 35%.

6. Composition according to one of the preceding claims, **characterized in that** it has a variation in specific surface area of not more than 30% and more particularly not more than 20%, after calcination for 4 hours at 1000°C and then for 4 hours at 1100°C.

7. Process for preparing a composition according to one of the preceding claims, **characterized in that** it comprises the following steps:
- (a) an aqueous mixture comprising zirconium and cerium compounds, and one of the abovementioned elements is formed;
- (b) the mixture thus formed is heated to a temperature of at least 100°C, as a result of which a precipitate suspended in the reaction medium is obtained;
- (c) the reaction medium obtained after the heating is brought to a basic pH;
- (d) either, an additive, chosen from anionic surfactants, nonionic surfactants, polyethylene glycols, carboxylic acids and salts thereof and surfactants of carboxymethylated fatty alcohol ethoxylate type, is first added to the medium obtained from the preceding step, and said precipitate is then separated out;
- (d') or the precipitate is first separated from the medium obtained from step (c) and said additive is then added to the precipitate;
- (e) a first calcination of the precipitate thus obtained is performed under inert gas or under vacuum at a temperature of at least 900°C, followed by a second calcination under an oxidizing atmosphere at a temperature of at least 600°C.

8. Process according to Claim 7, **characterized in that** after step (c), maturation of the reaction medium is performed by heating the medium to a temperature of at least 40°C.

9. Process according to Claim 7 or 8, **characterized in that** the compounds of zirconium, of cerium and of the abovementioned element used are a compound chosen from the nitrates, sulfates, acetates, chlorides and ceri-ammoniacal nitrate.

10. Process according to one of Claims 7 to 9, **characterized in that** the second calcination is performed in air.

11. Catalytic system, **characterized in that** it comprises, as support, a composition according to one of Claims 1 to 6 or obtained via the process according to one of Claims 7 to 10 and palladium supported on said composition.

12. Process for treating the exhaust gases of internal combustion engines, **characterized in that** a catalytic system according to Claim 11 is used as catalyst.
